# EUROPEAN PATENT APPLICATION

(11) **EP 4 533 935 A1**
(43) Date of publication of application: **09.04.2025**
(21) Application number: 23201762.4
(22) Date of filing: 05.10.2023
(51) Int. Cl.: A01D 41/127, A01D 41/14, A01D 61/00

(54) **HYDRAULICALLY SUSPENDED COMBINE HARVESTER FEEDER CHAIN**

(71) Applicant: CNH Industrial Belgium N.V., 8210 Zedelgem (BE)
(72) Inventor: Deruyter, Lucas, 8210 Zedelgem (BE); Vandewalle, Bert, 8210 Zedelgem (BE); Missotten, Bart M.A., 8210 Zedelgem (BE); Jongmans, Dré W.J., 8210 Zedelgem (BE)
(74) Representative: CNH Industrial IP Department

(57) **Abstract**

A feeder for an agricultural harvester (10) comprises a feeder housing (210, 212, 220), a front shaft (230), a rear shaft (240), at least one feeder loop (250), and a plurality of feeder slats (255). The feeder loop is drivable around the rear shaft and the front shaft. The feeder slats are mounted to the at least one feeder loop and configured for moving harvested crop over a bottom of the feeder housing, from the front shaft towards the rear shaft. An actuator (300) is coupled between the feeder housing and the front shaft and configured to adjust a tension in the at least one feeder loop by adjusting a distance between the front shaft and the rear shaft. A sensor (500) is operative to generate a sensor signal representative of a force acting on the actuator and configured to, in dependence of the sensor signal, control at least one operational parameter of the agricultural harvester other than the tension in the at least one feeder loop.

## Description

### TECHNICAL FIELD

The present invention relates to a feeder for an agricultural harvester, in particular a combine harvester. The feeder comprises a feeder housing, a front shaft, and rear shaft. At least one feeder loop, to which a plurality of feeder slats is mounted, is drivable around the two shafts to move harvested crop over a bottom of the feeder housing from the front shaft towards the rear shaft. The present invention further relates to a method of operating an agricultural harvester with such a feeder and to a computer program product for causing one or more processors to carry out that method.

### BACKGROUND

Many modern agricultural harvesters use a wide header to cut and gather the crop to be harvested while driving through the field. The cut crop is then moved to the centre of the header, where it is handed over to the crop inlet of the feeder housing. The feeder then pulls in the incoming crop through the feeder housing towards the subsequent crop processing sections of the harvester, such as a threshing and separation section where grain kernels are separated from the non-grain plant material.

In some combine harvesters, the feeder comprises an auger bed for moving the crop though the feeder to downstream crop processing units of the harvester. More often, the feeder comprises a number of belt or chain loops that are driven around the front and rear shaft. Feeder slats, mounted to he belt or chain loops and extending in a direction transverse to the driving direction of the harvesters. The feeder slats engage with the crop and pull it in over the bottom of the feeder housing.

Over time, normal wear may cause the belt or chain to permanently stretch. In addition, support members, such as drive sprockets mounted to the shafts, also experience wear that can reduce their effective diameter or spacing. Such stretching and wear causes the belt or chain to loosen over time. Thus, the chains and supports must be periodically serviced or replaced.

In the international patent application published as WO 2022/060731 A1, a spring-biased electric or hydraulic actuator is disclosed that connects the front shaft of the feeder to the feeder housing and allows for tensioning of the chain by moving the front shaft away from the rear shaft. An optimal chain tension is selected in the design process of the harvester, but may be adjusted by the operator later depending on harvesting conditions. A control system extends or retracts the actuator to maintain the tension force at a roughly constant value. It has, however, been observed that, even with a spring-biased actuator as disclosed in WO 2022/060731 A1, variations in crop loading and other dynamic factors result in continuous variations in the chain tension.

It is an aim of the present invention to address one or more disadvantages associated with the prior art.

### SUMMARY OF THE INVENTION

According to an aspect of the invention there is provided a feeder for an agricultural harvester, the feeder comprising, a feeder housing, a front shaft, a rear shaft, at least one feeder loop, and a plurality of feeder slats. The feeder loop is drivable around the rear shaft and the front shaft. The feeder slats are mounted to the at least one feeder loop and configured for moving harvested crop over a bottom of the feeder housing, from the front shaft towards the rear shaft. An actuator is coupled between the feeder housing and the front shaft and configured to adjust a tension in the at least one feeder loop by adjusting a distance between the front shaft and the rear shaft. A sensor is operative to generate a sensor signal representative of a force acting on the actuator and configured to, in dependence of the sensor signal, control at least one operational parameter of the agricultural harvester other than the tension in the at least one feeder loop.

The inventors have seen that a sensor coupled to the actuator can be useful beyond the added possibility to further improve the chain tension control system of the prior art to ensure a more constant tension in the feeder chain or belt. When providing this sensor signal, the observed variations in the feeder loop tension can be used advantageously to improve the harvesting process in unexpected ways that go far beyond the mere control of the feeder loop tension.

Useful information that may be derived from the sensor monitoring the force acting on the actuator includes, for example, a feed rate of the harvester or the involuntary intake of stones and other non-crop objects. Other crop aspects, such as a sugar content or moisture content influence the volume, mass, and friction of the crop being pulled through the feeder and may thus affect the tension in the feeder loop and the force acting on the actuator too.

Based on data from the sensor, the operation of the harvester can be monitored and adjusted to, for example, increase yields and energy efficiency, or reduce wear of, damage to, or downtime of the harvester. For example, the at least one operational parameter that is controlled in dependence of the sensor signal includes a forward driving speed of the harvester, an operational parameter of a header of the agricultural harvester, an operational parameter of a threshing section of the agricultural harvester, or an operational parameter of a residue processing system of the agricultural harvester.

A sudden and consistent drop in the sensor signal representing the force acting on the actuator may indicate breakage of the feeder loop. When this happens, the harvester may be controlled to make an emergency stop and the header may be lifted above the height of the crop to avoid taking in more crop. A more gradual or brief reduction of the force acting on the actuator may indicate a reduced feed rate. In response to an observed reduction of the feed rate, the controller may increase the driving speed of the agricultural harvester to bring the feed rate back to the desired level. To do so, the controller may first calculate an actual feed rate based on the incoming sensor signals. Alternatively, the drive speed is controlled directly based on the sensor signal indicating the force acting on the actuator.

The actuator may be an electric or a hydraulic actuator. When the actuator works hydraulically, the sensor may be a pressure sensor for measuring a pressure in a supply or return line of the actuator.

A biasing means may be arranged in cooperation with the actuator to bias the front shaft away from the rear shaft. Such biasing means will typically comprise a spring, coupled between the actuator and the front shaft. Alternatively, the spring may be mounted between the actuator and the feeder housing. When the actuator is a hydraulic actuator, the biasing means may comprise an accumulator, fluidly coupled to a supply or return line of the actuator.

In preferred embodiments, the feeder further comprises a second actuator and a second sensor. The second actuator is coupled between the feeder housing and the front shaft and configured to adjust a tension in the at least one feeder loop by adjusting a distance between the rear shaft and the front shaft. The second sensor is operative to generate a second sensor signal representative of a force acting on the second actuator. The controller is operatively coupled to the second sensor and further configured to, in dependence of the sensor signal, control at least one operational parameter of the agricultural harvester other than the tension in the at least one feeder loop.

When only a single actuator is used, it may, for example, be provided centrally in the feeder housing, halfway between a left and a right sidewall thereof. In that central position, one end of the actuator is then coupled to a central point of the front shaft. The other end of the actuator may, for example, be coupled to the top or bottom surface of the feeder housing, or to a pole or plate extending between the top and bottom surfaces. With the single actuator in a central position, the front shaft will remain parallel with the rear shaft when displaced by the actuator.

When using a second actuator and a second sensor, they are preferably installed to both sides (left and right) of the centre of the front shaft to provide for ensuring that the two shafts remain parallel when the front shaft is displaced. For example, one actuator is coupled to a left side wall of the feeder housing and the second actuator is coupled to a right side wall of the feeder housing.

Using more than one actuator and sensor makes it possible to detect when the front and rear shafts are not in parallel, or when one feeder loop is under more tension than another one. By comparing the sensor signals from multiple sensors, the controller may detect imbalances in the left-right distribution of crop entering the feeder. In response thereto, the controller may, for example, make adjustments to the travel path of the harvester or to the operation of the header to ensure that the balance is restored.

According to another aspect of the invention, a method is provided for operating an agricultural harvester as described above. Preferably, the agricultural harvester is a combine harvester. The method according to the invention is executed while harvesting a crop in a field and includes a step of receiving the sensor signal from the sensor and, in dependence of the sensor signal, controlling the at least one operational parameter of the agricultural harvester.

In embodiments of the method of the invention, the sensor signal is used for determining a feed rate of the agricultural harvester. This feed rate may be shown to the operator of the agricultural harvester, stored in a memory, and/or used for determining how to control the at least one operational parameter of the agricultural harvester.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used;
Figure 2 shows a feeder for use in the combine harvester of Figure 1; and
Figure 3 shows a cross section of the feeder of Figure 2.

### DETAILED DESCRIPTION

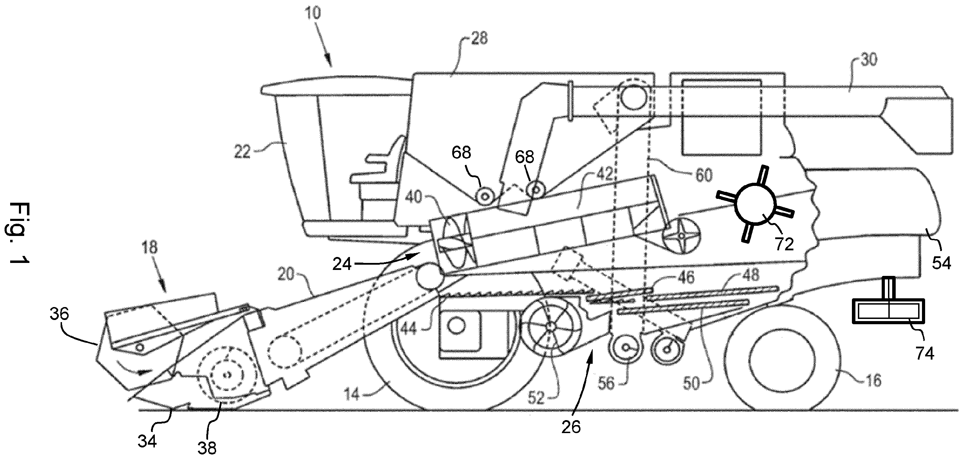

Figure 1 schematically shows an agricultural vehicle in the form of a combine harvester 10. The combine harvester 10 generally includes front and rear round engaging wheels 14, 16, a header 18, a feeder 20, an operator cabin 22, a threshing and separation system 24, a cleaning system 26, a grain tank 28 and an unloading tube 30.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. In other types of headers, one or more conveyor belts may be used to transport the crop laterally towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a chopper 72 and spread over the field across the full width of the header 18 by a spreader system 74. The spreader system 74 typically comprises a left and a right rotary spreader, each spreading the chopped crop residue received from the chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

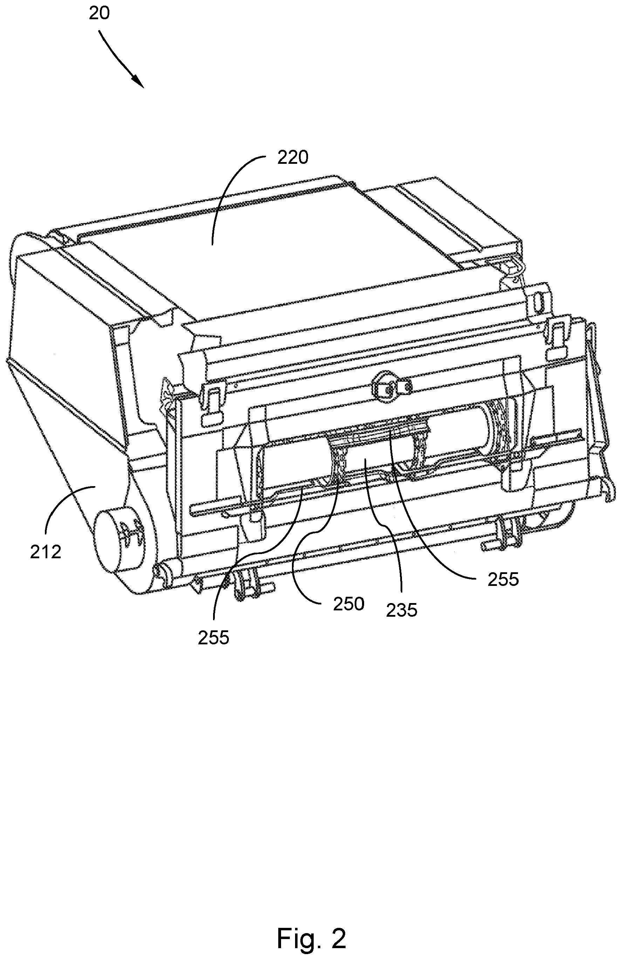

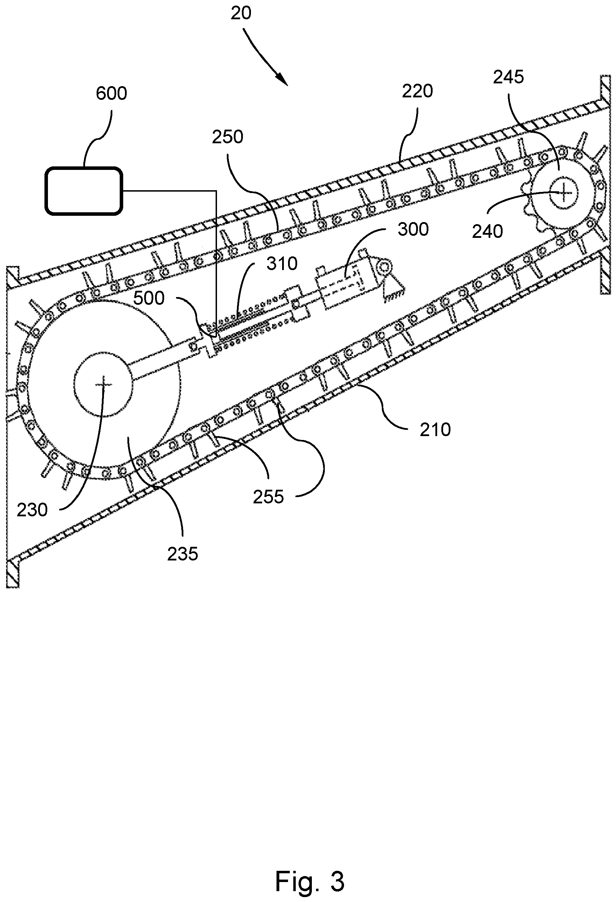

Figure 2 shows a feeder 20 for use in the combine harvester 10 of Figure 1. Figure 3 shows a cross section of the feeder 20 of Figure 2. This exemplary feeder 20 comprises four chains 250 that support a plurality of slats 255. Each slat 255 is attached to at least two of the chains 250. The chains 250 and slats 255 together form a conveyor that is mostly of fully contained within a feeder housing. The housing comprises a floor 210, a top surface 220, a left sidewall, and a right sidewall 212. The housing extends from an inlet opening at the front, to an outlet opening at the rear. The inlet opening is configured for being connected with a header 18. The outlet opening is connected to the chassis of the combine harvester 10 for handing over the harvested crop to the threshing system 24.

The conveyor is supported adjacent the inlet opening by a front drum 235 that is coaxially mounted to a front shaft 230. The front shaft 230 is rotatably mounted to the sidewalls 212 of the feeder housing in a way that allows for translational movement of the front shaft 230 and the front drum 235 in at least one direction. At the rear opening of the feeder housing, a rear shaft 240, also called top shaft 240, is provided. Sprockets 245 on the rear shaft 240 engage the links of the chains 250. In Figure 3, only one chain 250 and sprocket 245 are visible, but it will be understood that a separate sprocket 245 typically will be provided for each chain 250. The front drum 235 may include sprockets, toothlike features, or chain guides, or the front drum 235 may be replaced by an assembly similar to the rear shaft 240.

In use, the front shaft 230 or the rear shaft 240 is driven by a motor to drive the chains 250 and move the slats 255 along the feeder housing. The non-driven shaft may be an idler shaft. The driven shaft may be directly driven by an electric or hydraulic motor, or via drive belts driven by a motor that is located elsewhere on the chassis.

The slats 255 cooperate with the floor 210 of the housing to carry crop material from the inlet opening to the rear opening. Typically, the front opening that is connected to the header 18 is located relatively close to the ground and the rear opening is located higher up. As a result, the feeder 20 and the conveyor are inclined and the conveyor conveys the harvest crop in a rearward and upward direction.

The illustrated chains 250, sprockets 245 and the like may be replaced, in some instances, with V-belts, poly-V belts, cogged belts, or other flexible drive members. Such flexible drive members may engage suitable pulleys or cog wheels. Such variations are known in the art, and it will be understood that references herein to "chains" and "sprockets" and the like also refer to alternative flexible drive members like the belts mentioned above.

The feeder conveyor system also includes an adjustment mechanism having an actuator 300 that is coupled between the feeder housing and the front shaft 230 for moving the front drum 235 to and from sprockets 245 on the rear shaft. Moving the front drum 235 forward, i.e. away from the rear shaft results in an increased tension in the conveyor chain 250. Moving the front drum 235 rearward releases some tension. A biasing member, such as a spring 310 may be coupled between the front shaft and the actuator 300 to absorbs shocks and vibrations while keeping the conveyor chains 250 under an appropriate amount of tension. In other embodiments, the spring 300 may be mounted between the actuator 300 and the feeder housing.

The actuator 300 may be an electric or a hydraulic actuator 300. When the actuator 300 works hydraulically, the biasing means may comprise an accumulator, fluidly coupled to a supply or return line of the actuator 300.

In preferred embodiments, the feeder 20 further comprises a second actuator 300. Like the first actuator 300, the second actuator 300 is coupled between the feeder housing and the front shaft 230 and configured to adjust a tension in the conveyor chains 250 by adjusting a distance between the rear shaft 240 and the front shaft 230. When only a single actuator 300 is used, it may, for example, be provided centrally in the feeder housing, halfway between a left and a right sidewall 212 thereof. In that central position, one end of the actuator 300 is then coupled to a central point of the front shaft 230. The other end of the actuator 300 may, for example, be coupled to the top 220 or bottom surface 210 of the feeder housing, or to a pole or plate extending between the top 220 and bottom surfaces 210. With the single actuator 300 in a central position, the front shaft 230 will remain parallel with the rear shaft 240 when displaced by the actuator 300.

According to the invention, a sensor 500 is operative to generate a sensor signal representative of a force acting on the actuator 300 and configured to, in dependence of the sensor signal, control at least one operational parameter of the agricultural harvester 10 other than the tension in the conveyor chain 250 or belt. The inventors have seen that the observed variations in the conveyor chain tension can be used advantageously to improve the harvesting process in unexpected ways that go far beyond the mere control of the conveyor chain tension.

Useful information that may be derived from the sensor 500 monitoring the force acting on the actuator 300 includes, for example, a feed rate of the harvester 10 or the involuntary intake of stones and other non-crop objects. Increasing feed rates may lead to a sustained increase of the tension on the conveyor chains 250. Similarly, a drop in the feed rate will reduce the tension in the chains 250. When a stone is caught in between the feeder conveyor and the bottom 210 of the feeder housing, a short peak of the chain tension may be observed. This peak may end when the stone is dropped in a stone trap near the rear shaft 240. If the stone or other non-crop object causes a blockage in the feeder channel, the chain tension may rise even further. To avoid any further damage to the feeder 20, an alarm warning may be generated or an emergency stop may be initiated automatically. Other crop aspects, such as a sugar content or moisture content influence the volume, mass, and friction of the crop being pulled through the feeder 20 and may thus affect the tension in conveyor chains 250 and the force acting on the actuator 300 too.

Based on data from the sensor 500, the operation of the harvester 10 can be monitored and adjusted to, for example, increase yields and energy efficiency, or to reduce wear of, damage to, or downtime of the harvester 10. For example, the at least one operational parameter that is controlled in dependence of the sensor signal includes a forward driving speed of the harvester 10, an operational parameter of a header 18 of the agricultural harvester 10, an operational parameter of a threshing section 24 of the agricultural harvester 10, or an operational parameter of a residue processing section of the agricultural harvester. Operational parameters of the threshing section 24 that may be adjusted in dependence of the sensor signal, for example, include a rotor speed of the threshing rotor 40, a threshing gap between the threshing rotor 40 and the and the threshing concave 42, or an orientation of threshing elements on the rotor 40 or in the concave 42. Operational parameters of the residue processing section that may be adjusted in dependence of the sensor signal, for example, include a counter-knife position in the residue chopper 72, a rotational speed of the residue spreader 74, or a deflector orientation of the residue spreader 74.

A sudden and consistent drop in the sensor signal representing the force acting on the actuator 300 may indicate breakage of the conveyor chain 250. When this happens, the harvester 10 may be controlled to make an emergency stop and the header 18 may be lifted above the height of the crop to avoid taking in more crop. A more gradual or brief reduction of the force acting on the actuator 300 may indicate a reduced feed rate. In response to an observed reduction of the feed rate, the controller 600 may increase the driving speed of the agricultural harvester 10 to bring the feed rate back to the desired level. To do so, the controller 600 may first calculate an actual feed rate based on the incoming sensor signals. Alternatively, the drive speed is controlled directly based on the sensor signal indicating the force acting on the actuator 300.

The sensor 500 may be implemented as a strain gauge integrated with the actuator 300 or associated with a connection between the actuator 300 and the front shaft 235. When the actuator 300 works hydraulically, the sensor 500 may be a pressure sensor for measuring a pressure in a supply or return line of the actuator 300. Optionally, a position sensor (not shown) is used to monitor a distance between the front shaft 230 and the rear shaft 240, between the front shaft 230 and a fixed point on the actuator 300 or feeder housing, or between a stationary and a moving part of the actuator 300.

Advantageously, the feeder conveyor system may include multiple sensors 500 for measuring a force acting upon the one or more actuators 300. When two or more sensors are used, they are preferably installed to both sides (left and right) of the centre of the front shaft 230 to provide for ensuring that the two shafts remain parallel when the front shaft is displaced. For example, one actuator is coupled to a left side wall of the feeder housing and the second actuator is coupled to a right side wall of the feeder housing.

Using more than one actuator 300 and sensor 500 makes it possible to detect when the front and rear shafts 230, 240 are not in parallel, or when one conveyor chain 250 is under more tension than another one. By comparing the sensor signals from multiple sensors 500, the controller 600 may detect imbalances in the left-right distribution of crop entering the feeder 20. In response thereto, the controller 600 may, for example, make adjustments to the travel path of the harvester 10 or to the operation of the header 18 to ensure that the balance is restored.

## Claims

1. A feeder (20) for an agricultural harvester (10), the feeder (20) comprising:
a feeder housing (210, 212, 220);
a front shaft (230);
a rear shaft (240);
at least one feeder loop (250), drivable around the rear shaft (240) and the front shaft (230);
a plurality of feeder slats (255) mounted to the at least one feeder loop (250) and configured for moving harvested crop over a bottom (210) of the feeder housing (210, 212, 220), from the front shaft (230) towards the rear shaft (240);
an actuator (300), coupled between the feeder housing (210, 212, 220) and the front shaft (230) and configured to adjust a tension in the at least one feeder loop (250) by adjusting a distance between the front shaft (230) and the rear shaft (240);
a sensor (500), operative to generate a sensor signal representative of a force acting on the actuator (300); and
a controller (600), operatively coupled to the sensor (500) and configured to, in dependence of the sensor signal, control at least one operational parameter of the agricultural harvester (10) other than the tension in the at least one feeder loop.

2. A feeder (20) as claimed in claim 1, wherein the at least one operational parameter includes one or more of the following:
a forward driving speed of the harvester (10);
an operational parameter of a header (18) of the agricultural harvester (10);
an operational parameter of a threshing section (24) of the agricultural harvester (10); and
an operational parameter of a residue processing system of the agricultural harvester (10).

3. A feeder (20) as claimed in claim 1 or 2, wherein the actuator (300) is a hydraulic actuator.

4. A feeder (20) as claimed in claim 3, wherein the sensor is a pressure sensor for measuring a pressure in a supply or return line of the actuator (300).

5. A feeder (20) as claimed in any preceding claim, wherein the actuator (300) is an electric actuator.

6. A feeder (20) as claimed in any preceding claim, further comprising a biasing means (310), arranged in cooperation with the actuator (300) to bias the front shaft (230) away from the rear shaft (240).

7. A feeder (20) as claimed in claim 6, wherein the biasing means (310) comprises a spring (310).

8. A feeder (20) as claimed in claim 6 or 7, wherein the actuator (300) is a hydraulic actuator and the biasing means comprises an accumulator.

9. A feeder (20) as claimed in any of the preceding claims, further comprising:
a second actuator (300), coupled between the feeder housing (210, 212, 220) and the front shaft (230) and configured to adjust a tension in the at least one feeder loop (250) by adjusting a distance between the rear shaft (230) and the front shaft (240);
a second sensor (500), operative to generate a second sensor signal representative of a force acting on the second actuator (300); and wherein
the controller (600) is operatively coupled to the second sensor (500) and further configured to, in dependence of the sensor signal, control at least one operational parameter of the agricultural harvester (10) other than the tension in the at least one feeder loop.

10. A feeder (20) as claimed in claim 9, wherein the actuator (300) is coupled to a left side wall of the feeder housing (210, 212, 220) and the second actuator (300) is coupled to a right side wall (212) of the feeder housing (210, 212, 220).

11. An agricultural harvester (10) comprising a feeder (20) as claimed in any of the preceding claims.

12. An agricultural harvester (10) as claimed in claim 11, wherein the agricultural harvester (10) is a combine harvester (10).

13. A method of operating an agricultural harvester (10) as claimed in claim 11 or 12, the method comprising the steps of:
harvesting a crop in a field; and
while harvesting, receiving the sensor signal from the sensor (500) and, in dependence of the sensor signal, controlling the at least one operational parameter of the agricultural harvester (10).

14. A method as claimed in claim 13, further comprising a step of repeatedly, based on the sensor signal, determining a feed rate of the agricultural harvester (10).

15. A non-transitory, computer-readable storage medium storing instructions thereon that when executed by one or more processors (600) cause the one or more processors (600) to execute the method of claim 13 or 14.
